# EUROPEAN PATENT APPLICATION

(11) **EP 1 842 874 A1**
(43) Date of publication of application: **10.10.2007**
(21) Application number: 07006883.8
(22) Date of filing: 02.04.2007
(51) Int. Cl.: C08K 3/00, C08K 5/00, C09C 1/02, C08K 3/26, C08K 9/04, C08J 3/22, C08K 9/08

(54) **Method of manufacturing environmentally friendly plastic nano-particles**

(30) Priority: 04.04.2006 CN 200610067117
(71) Applicant: Cheng, Kuo-Hua, Daan Dist. Taipei Taiwan (TW); Chen, Hsiao-Fen, Daan Dist. Taipei (TW)
(72) Inventor: Cheng, Kuo-Hua, Taipei, Taiwan (CN); Chen, Hsiao-Fen, Taipei, Taiwan (CN)
(74) Representative: Riesenberg, Axel

(57) **Abstract**

A method of manufacturing environmentally friendly plastic nano-particles is disclosed. First, CaCO₃ is heated and then HST is added to the heated CaCO₃. Next, a predetermined amount of Dy is added into the above reaction mixture for a predetermined times. Next, a predetermined amount of nmZnO₂ and Ce[CH₃(CH₂)₁₆CO₂⁻]₃ are added for a predetermined times into the above reaction mixture. Next, NE-3 and vegetable oil are added into the above reaction mixture. Finally, PE raw material is added into the above reaction mixture to form the plastic particles.

## Description

### BACKGROUND OF THE INVENTION

### 1. Field of the invention

The present invention relates to a method of manufacturing environmentally friendly plastic nano-particles. More particularly, lanthanum rare earth metal is used to produce a low cost environmentally friendly product having advantageous features of naturally degradable, antibacterial and nontoxic during burning.

### 2. Description of the Related Art

The raw material for producing the plastic is commonly comprised of CaCO₃, polyolefin, Poly ethylene, titanium white, zinc stearate and the coupling agent treated in an activation process. The above raw material comprises 80% of CaCO₃, and the plastic product produced there-from has less elasticity. Therefore, such raw material is only suitable for manufacturing disposable tableware, plastic bags, boxes and the like. Although the toxicity generated during burning of the resin may be reduced, however inevitably there still exist some toxicity and un-biodegradable problems.

For 20 years some manufacturers used CaCO₃, polyolefin and aid material to manufacture a filling raw material for the polyolefin. Recently, manufacturers propose mixing 2.5% higher dose of coupling agent during the activation process. The improvement of the machinery technology may be capable of increasing the content including up to 80% of CaCO₃, 14% of polyolefin and 6 % of the aid material. However, the use of coupling agent significantly increases the manufacturing cost and requires an activation time of 30 minutes. Thus, the production throughput is reduced and the yield is reduced. The content of 6% of aid material would significantly increase the manufacturing cost. The use of aid material containing Poly ethylene, titanium white and zinc stearate in the manufacture can increase yield of the raw material by 30%. However, the problem of insufficient elasticity due to large quantity of CaCO₃ cannot be resolved. The following are some of the defects of the conventional manufacturing method.
1. High content of CaCO₃ makes the product harder and less elastic. Thus, the product is fragile.
2. The product obtained using the above raw material generates odd smell, and is not suitable for use in producing the food products.
3. More than 95% of the similar products on the market are non-biodegradable, which cause environmental problems.
4. The raw material is used in blow film process to produce plastic products, for example, PE products, and the quality of the products is affected due to the quality of the raw material.

The above conventional method of manufacturing the raw material affects the quality and the products manufactured there-from due to the different ingredients or formulations of such raw material, and therefore, it is highly desirable to improve the manufacturing method.

### SUMMARY OF THE INVENTION

Accordingly, the present invention provides lowcost environmental protective plastic nano-particles, which is biodegradable.

According to an aspect of the present invention, the method of manufacturing the raw material includes heating the CaCO₃ and adding HST to the heated CaCO₃. Next, a predetermine amount of Dy is added for few times at predetermined time intervals and then nmZnO₂ Ce[CH₃(CH₂)₁₆CO₂⁻]₃ is added. After adding the nmZnO₂, Ce[CH₃(CH₂)₁₆CO₂⁻]₃ for few times at predetermined interval of time, PE wax (NE-3) and vegetable oil are added. Finally, the PE raw material is added to produce the plastic nano-particles. The product produced using the plastic nano-particle is biodegradable, antibacterial and non toxic during burning, and cost effective. Thus, the product is environmentally protective with better physical properties.

According to another aspect of the present invention, each ingredient is added at a predetermined time during each process step of manufacturing the plastic particles. Dy of the lanthanum rare earth metal is used as the coupling agent and the Ce[CH₃(CH₂)₁₆CO₂⁻]₃ is a natural strong oxidant and degradable ingredient. Thus, the number of the ingredients required for manufacturing the raw material is less, and the manufacturing cost is reduced. Most importantly, the product obtained using the material of the present invention is biodegradable and generate no pollution.

### BRIEF DESCRIPTION OF THE DRAWING

Fig. 1 is a flowchart of a process according to an embodiment of the present invention.

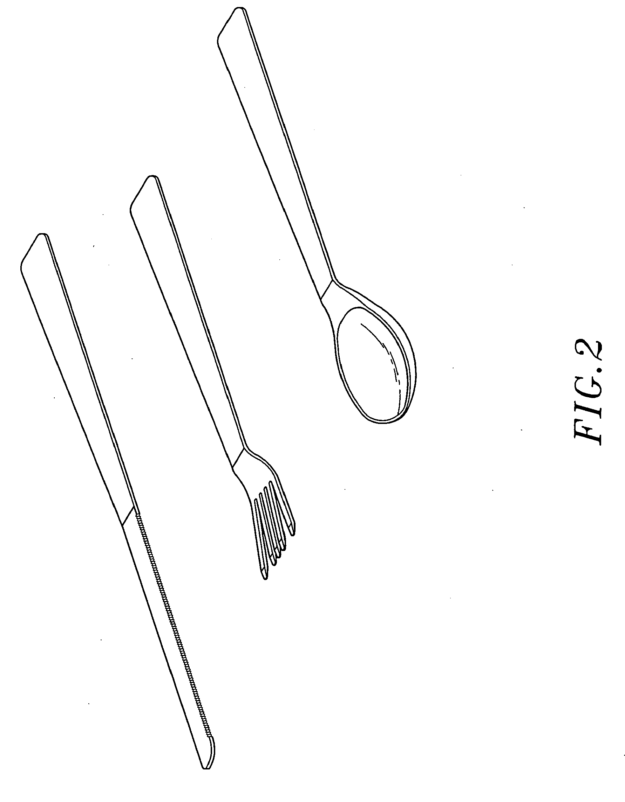

Fig. 2 is an elevational view of a product manufactured using the material of the present invention.

### DETAIL DESCRIPTION OF THE INVENTION

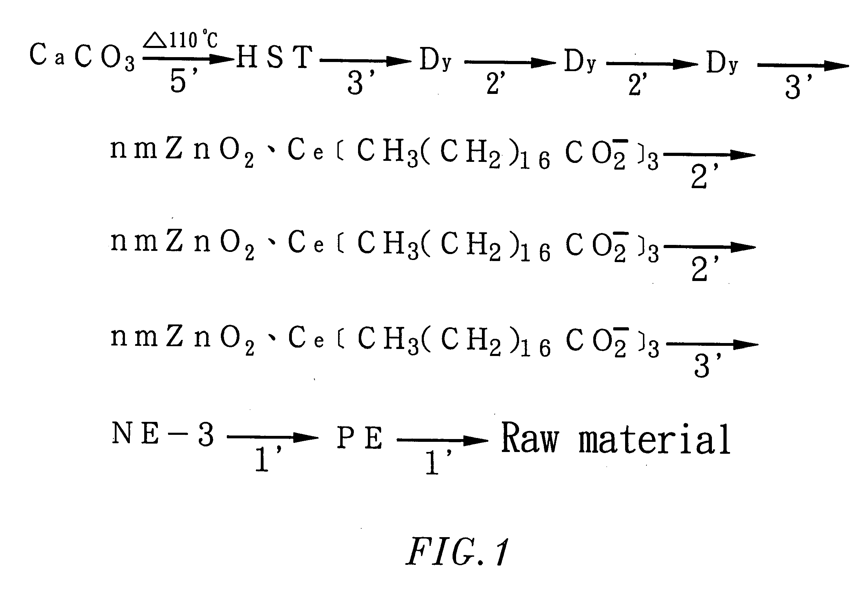

A process of manufacturing the raw material of the present invention may be described with reference to FIG. 1.

At step 1, 150 kg CaCO₃ is heated to 110°C and maintained at this temperature for 5 minutes, and then 0.75 kg HST is added to the heated CaCO₃.

At step 2, 250 g Dy is added into the above reaction mixture after 3 minutes, and another 250 g of Dy is added twice in every 2 minutes time interval.

At step 3, 200 g of nmZnO₂ and 200 g of Ce[CH₃(CH₂)₁₆CO₂⁻]₃ are added to the above reaction mixture after 3 minutes, and then another 200 g of nmZnO₂ and another 200 g of Ce[CH₃(CH₂)₁₆CO₂⁻]₃ are added twice at every 2 minutes time interval.

At step 4, 5.25 kg of NE-3 and 0.75 kg of vegetable oil are added to the above reaction mixture after 3 minutes.

At step 5, 28 kg of PE is added to the above reaction mixture after 1 minute.

At step 6, the raw material of the plastic particle is obtained after 1 minute. The process may be illustrated as follows.

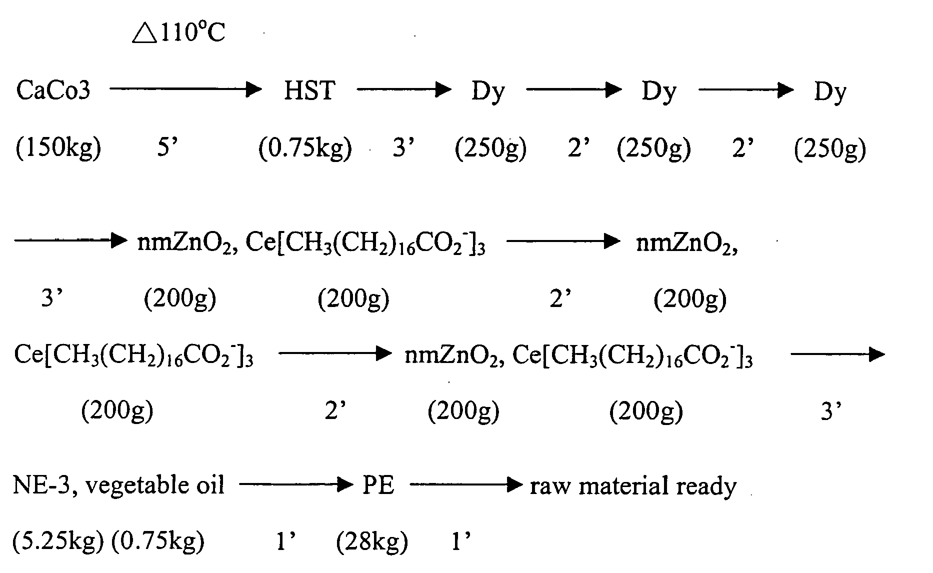

In the above process, Dy is used as the coupling agent. Because Dy has an excellent paramagnetism property and therefore can coats 99.7 % of CaCO₃ particle, and therefore the connecting property of the CaCO₃ can be effectively promoted. Besides, because Ce[CH₃(CH₂)₁₆CO₂⁻]₃ is an excellent natural strong oxidant and a degradable compound, and therefore the product manufactured there-from can be biodegradable.

Furthermore, the content of the raw material manufactured from the plastic particle includes 72 % to 89 % of CaCO₃, 10 % to 19 % of polyolefin and 9 % to 1 % of aid material.

The raw material manufactured from the above plastic particles contain 81% CaCO₃, 15% polyolefin and 4 % aid material. The 4% aid material contains 0.4% Dy, 0.4% HST, 0.3% nmZnO₂, 0.3% Ce[CH₃(CH₂)₁₆CO₂⁻]₃, 2.5% NE-3 and 0.4% vegetable oil. The raw material contained the above proportion can be added to the mixture of CaCO₃ and polyolefin to provide the better physical property and the low cost, and the quality of the olefin product is of food grade.

Furthermore, the raw material manufactured from the plastic particle of the present invention can be mixed with PP or PE in a certain proportion, for example, 3 to 9 portions of the raw material with 7 to 1 portions of PP or PE. The preferred proportion is 4 portions of the raw material with 6 portions of PP or PE, or 8 portions of the raw material with 2 portions of PP or PE to manufacture tools, such as knifes, forks, spoons, straws, bowl, dish, cups and the like, which are naturally degradable without polluting the environment. The polymer chain of polyolefin will be destroyed during the photo-synthesis, oxidation, evaporation and phagocytosis reactions. Thus, the product manufactured from the raw material of the present invention is biodegradable and anti-bacterial, and do not generate toxic smoke during burning. The product upon burning is transformed into biodegradable fine ashes.

The above plastic particle according to the preferred embodiment of the present invention contains Dy of lanthanum rare earth metal and Ce[CH₃(CH₂)₁₆CO₂⁻]₃), and can react with other elements in a manner that the plastic particle has the self-degrade property. Dy is a coupling agent and Ce[CH₃(CH₂)₁₆CO₂⁻]₃ is a strong oxidant and a degradable compound, and they may react with nmZnO₂ to make the product manufactured from the plastic particles easily degradable. These excellent features of the present invention substantially reduce the manufacturing cost. To use the plastic particle as the raw material, mixture of CaCO₃ and polyolefin can be added to increase the physical properties of the mixture which can also lower the cost, and the quality thereof attaining the level for food grade applications. The above example is merely used for demonstrating the embodiment of the present invention, and it is not used to limit the scope of the present invention, and it should understood that any manufacturing method using plastic particles of the present invention as the raw material to produce the biodegradable products that is environmentally friendly, even without illustration or structural amendment, shall also be construed to be within the scope of the present invention.

Thus, the environmentally friendly plastic nano-particles has the following advantages.
1. Dy has excellent para-magnetism and can coat 99.7 % of CaCO₃ particle so that the CaCO₃ have excellent physical properties and less fragile.
2. The plastic particle doesn't generate odd smell, and manufacturing cost can be substantially reduced and the physical property thereof can be upgraded by mixing with the mixture of CaCO₃ and polyolefin. The quality of the product can be upgraded to for food grade applications.
3. The plastic particle has Ce[CH₃(CH₂)₁₆CO₂⁻]₃ of the lanthanum rare earth metal as the degradable ingredient and Ce[CH₃(CH₂)₁₆CO₂⁻]₃ is a natural strong oxidant. The polymer chain of polyolefin can be destroyed in the photosynthesis, oxidization, evaporation, and phagocytosis reactions. Thus, the product manufactured from the raw material of the present invention can be biodegradable, anti-bacterial, and environmentally friendly.
4. Dy is a coupling agent and may completely coat CaCO₃ when mixed with the raw material in the proportion of 3 to 9 portions of the raw material with 7 to 1 portions of PP or PE to produce environmentally protective, low cost and with better physical properties.
5. The products manufactured from the plastic particles as a raw material do not produce black smoke or toxic smoke during burning. The products will be transformed into biodegradable fine ashes after burning and therefore being environmentally friendly.

While the invention comprises been described in conjunction with a specific best mode, it is to be understood that many alternatives, modifications, and variations will be apparent to those skilled in the art in light of the foregoing description. Accordingly, it is intended to embrace all such alternatives, modifications, and variations in which fall within the spirit and scope of the included claims. All matters set forth herein or shown in the accompanying drawings are to be interpreted in an illustrative and non-limiting sense.

## Claims

1. A method of manufacturing an environmentally friendly plastic nano-particles comprising:
(a) heating CaCO₃ and adding HST to the heated CaCO₃;
(b) adding a predetermined amount of Dy into the reaction mixture obtained in step (a) for a predetermined times;
(c) adding a predetermined amount of nmZnO₂ and Ce[CH₃(CH₂)₁₆CO₂⁻]₃ for a predetermined times into the reaction mixture obtained in step (b);
(d) adding NE-3 and vegetable oil into the reaction mixture obtained in step (c); and
(e) adding PE raw material into the reaction mixture obtained in step (d) to form the plastic particles.

2. The method of manufacturing environmentally friendly plastic nano-particles according to claim 1, wherein the CaCO₃ is heated to 110°C and maintained at this temperature for 5 minutes.

3. The method of manufacturing environmentally friendly plastic nano-particles according to claim 1, wherein after the HST is added to CaCO₃, a predetermined amount of Dy is added after 3 minutes, and then a predetermined amount of Dy is added multiple times at every two minutes time interval.

4. The method of manufacturing environmentally friendly plastic nano-particles according to claim 1, wherein Dy comprises lanthanum rare earth metals and is a coupling agent with paramagnetism property suitable for coating 99.7 % of CaCO₃.

5. The method of manufacturing environmentally friendly plastic nano-particles according to claim 1, wherein Ce[CH₃(CH₂)₁₆CO₂⁻]₃ comprises lanthanum rare earth metals, and is a strong oxidant and biodegradable.

6. The method of manufacturing environmentally friendly plastic nano-particles according to claim 1, wherein after the HST is added to CaCO₃, a predetermined amount of Dy is added after 3 minutes, predetermined amount of nmZnO₂, Ce[CH₃(CH₂)₁₆CO₂⁻]₃ is added multiple times in every two minutes time intervals.

7. The method of manufacturing environmentally friendly plastic nano-particles according to claim 1, wherein after adding CaCO₃ into HST, Dy, nmZnO₂ and Ce[CH₃(CH₂)₁₆CO₂⁻]₃, NE-3 and vegetable oil are added after 3 minutes, and then PE raw material is added after 1 minute to complete the process.

8. The method of manufacturing environmentally friendly plastic nano-particles according to claim 1, wherein said raw material comprises 72 % to 89 % of CaCO₃, 10 % to 19 % of polyolefin and 9 % to 1 % of aid material.

9. The method of manufacturing environmentally friendly plastic nano-particles according to claim 1, wherein said plastic particles are used as said raw material, and 3 to 9 portions of said raw material is mixed with 1 portion of PP or PE.
